# EUROPÄISCHE PATENTANMELDUNG

(11) **EP 1 688 305 A2**
(43) Veröffentlichungstag der Anmeldung: **09.08.2006**
(21) Anmeldenummer: 06002233.2
(22) Anmeldetag: 03.02.2006
(51) Int. Cl.: B60R 9/06, B60R 9/08, B60R 11/00

(54) **Fahrzeug**

(30) Priorität: 04.02.2005 DE 202005002375 U
(71) Anmelder: hymer idc GmbH + CO. KG, 88339 Bad Waldsee (DE)
(72) Erfinder: Tomforde, Johann, Prof.Dipl.-Ing., 71069 Sindelfingen (DE)
(74) Vertreter: Patentanwälte Ruff, Wilhelm, Beier, Dauster & Partner

(57) **Zusammenfassung**

2.1 Fahrzeug mit einer Transporthalterung für eine Außenwandung eines Fahrzeuges mit wenigstens einem fahrzeugfest angeordneten Halteprofil, an dem wenigstens ein Halteelement formschlüssig und lösbar befestigbar ist.
2.2 Erfindungsgemäß wird das Halteprofil (22a, 22b) an einer Außenwandung einer Fahrzeugtür (21 a, 21 b) quer zu einer Türhochachse ausgerichtet, und dem Halteprofil (22a, 22b) ist in Abstand unterhalb des Halteprofiles eine an der Außenwandung angeordnete Gegenhalterung (28, 30) zugeordnet, die wenigstens einen zusätzlichen, unteren Abstützbereich für wenigstens ein Transportgut (24, 25) bildet, das mit wenigstens einem oberen Stützbereich an dem Halteelement (27, 29) gehalten ist.
2.3. Einsatz für Freizeitfahrzeuge

## Beschreibung

Die Erfindung betrifft ein Fahrzeug mit einer Transporthalterung für eine Außenwandung eines Fahrzeugs mit wenigstens einem fahrzeugfest angeordneten Halteprofil, an dem wenigstens ein Halteelement formschlüssig und lösbar befestigbar ist, oder ein Fahrzeug mit einem Innenraum, der mehrere Fahrzeugsitze aufweist, und in dem eine zwischen einer Funktionslage und einer Ruhelage angeordnete Liegeeinrichtung gelagert ist.

Fahrzeuge in Form von Reisemobilen sind allgemein bekannt. Je nach Größe des Reisemobils ist es möglich, dass in einem Fahrzeuginnenraum eine Liegeeinrichtung in Form eines Klappbettes zwischen einer an die Wand geklappten Ruheposition und einer nach unten geklappten Funktionsposition beweglich gelagert ist. Außenseitig weist ein solches Reisemobil häufig Relingstangen auf, die eine Befestigung von Gepäckträgern, Fahrradständern oder ähnlichem ermöglichen.

Aufgabe der Erfindung ist es, ein Fahrzeug der eingangs genannten Art zu schaffen, das einen kompakten Aufbau in Form eines Kombi-Personenkraftwagens, eines Minivans, einer Großraumlimousine oder ähnlichem aufweist und zusätzlich zu seiner Personenbeförderungsfunktion variable Gestaltungsmöglichkeiten für Reisemobilfunktionen bietet.

Diese Aufgabe wird dadurch gelöst, dass das Halteprofil an einer Außenwandung einer Fahrzeugtür quer zu einer Türhochachse ausgerichtet ist, und dass dem Halteprofil in Abstand unterhalb des Halteprofiles eine an der Außenwandung angeordnete Gegenhalterung zugeordnet ist, die wenigstens einen zusätzlichen, unteren Abstützbereich für wenigstens ein Transportgut bildet, das mit wenigstens einem oberen Stützbereich an dem Halteelement gehalten ist. Entsprechende Transportgegenstände können somit hängend transportiert werden, indem sie zum einen an das Halteprofil angehängt werden und zum anderen mit ihrem unteren, an der Außenwandung anliegenden Bereich durch die Gegenhalterung gestützt sind.

In vorteilhafter Weise ist als Gegenhaltung eine Magnethalterung vorgesehen, die in individueller Positionierung an die Außenwandung ansetzbar ist. Voraussetzung für eine derartige Magnethalterung ist es, dass die Außenwandung des Fahrzeugs metallisch ist. Der Vorteil der Magnethalterung ist es, dass die Magnethalterung an beliebigen Positionen an der Außenwandung festlegbar ist, ohne dass die Außenwandung hierzu entsprechende Vorkehrungen benötigt. Die Gegenhalterung kann somit ausschließlich auf die Abmessungen des Transportgegenstandes abgestimmt und entsprechend an der Außenwandung positioniert werden.

In weiterer Ausgestaltung der Erfindung sind das wenigstens eine Halteelement und die Gegenhalterung an einem gemeinsamen Trägerrahmen angeordnet, an dem wenigstens ein Transportgut lösbar befestigbar ist. Der Trägerrahmen kann vorzugsweise an der Außenwandung verbleiben und lediglich das Transportgut vom Fahrzeug entfernt werden. Der Trägerrahmen dient somit als Gepäckträger.

In weiterer Ausgestaltung der Erfindung ist als Transportgut ein rucksackartiges Gepäckteil vorgesehen, das mit wenigstens einer Laufrolle sowie mit wenigstens einem Tragegriff versehen ist. Dieses Gepäckteil kann somit eine eigenständige Funktion erfüllen, auch wenn es nicht am Fahrzeug befestigt ist.

In weiterer Ausgestaltung der Erfindung weist das Halteprofil wenigstens ein offenes Stirnende zum Einschieben oder Entfernen des wenigstens einen Halteelementes in Profillängsrichtung auf. Das Halteprofil ist bis zu einem Randbereich der Fahrzeugtür geführt, und auf Höhe des Halteprofiles ist an einem benachbarten Randbereich eines an die Fahrzeugtür anschließenden Karosserieteiles ein Sicherungsteil vorgesehen, das ein Einschieben oder Entfernen des Halteelementes relativ zu dem offenen Stirnende des Halteprofiles bei geschlossener Fahrzeugtür verhindert. Hierdurch wird in besonders geeigneter Weise eine Diebstahlsicherung geschaffen, da das wenigstens eine Halteelement nicht aus dem Halteprofil entfernt werden kann, solange das Sicherungsteil sich nicht in seiner Freigabestellung befindet.

In weiterer Ausgestaltung der Erfindung ist als Sicherungsteil ein weiteres Halteprofil vorgesehen, das fluchtend zu dem Halteprofil der Fahrzeugtür an dem anschließenden Karosserieteil fortgesetzt ist. Vorzugsweise ist das anschließende Karosserieteil ebenfalls als Fahrzeugtür ausgeführt, wobei vorzugsweise die beiden Fahrzeugtüren in einem Heckbereich des Fahrzeugs angeordnet sind und eine zweiflüglige Hecktüranordnung bilden, wobei die beiden Hecktürflügel in entgegengesetztem Schwenksinn zueinander zu öffnen sind. Die beiden Halteprofile weisen neben ihrer Haltefunktion somit für das jeweils benachbarte Halteprofil auch die beschriebene Sicherungsfunktion auf.

Die der Erfindung zugrundeliegende Aufgabe wird dadurch gelöst, dass die Liegeeinrichtung einen Liegerahmen aufweist, der zwischen der Ruhelage und der Funktionslage relativ zu einer Fahrzeughorizontalebene parallel höhenverlagerbar ist, und dass an dem Liegerahmen Verlagerungsmittel angreifen, die oberhalb einer Fahrzeugbordkante an Karosseriesäulenabschnitten angeordnet sind. Die Liegeeinrichtung bzw. der Liegerahmen ist innerhalb des Fahrzeugs immer zumindest ungefähr horizontal angeordnet und wird in dieser horizontalen Lage höhenverlagert, je nachdem, ob die Liegeeinrichtung benötigt wird oder nicht. Für die Ruhelage und für die Funktionslage sind der Liegeeinrichtung und damit dem Liegerahmen Arretierungen zugeordnet, die eine sichere Positionierung der Liegeeinrichtung und des Liegerahmens in der jeweiligen Ruhelage oder Funktionslage ermöglichen. In vorteilhafter Weise wird der Liegerahmen in seiner Ruhelage in einem Dachbereich des Fahrzeuginnenraumes positioniert, wobei vorzugsweise die Kopffreiheit von unterhalb der Liegeeinrichtung sitzenden Personen durch den in seiner Ruhelage befindlichen Liegerahmen nicht beeinträchtigt ist. Das Fahrzeug kann somit in der Ruhelage der Liegeeinrichtung als Personenkraftwagen mit mehreren Sitzreihen eingesetzt werden, die unter der Liegeeinrichtung angeordnet sind. In der Funktionslage der Liegeeinrichtung und des Liegerahmens ist innerhalb des Fahrzeugs eine Schlafmöglichkeit gegeben. Die erfindungsgemäße Lösung eignet sich insbesondere für Mehrzweckfahrzeuge, die Personenkraftwagen- oder Minivangröße aufweisen. Als Verlagerungsmittel können Längsführungen, Schwenklagerungen, Kurvenführungen oder Teleskoplagerungen oder ähnliches vorgesehen sein. Die Anordnung der Verlagerungsmittel an Karosseriesäulenabschnitten gewährleistet zum einen eine äußerst stabile Halterung. Zum anderen wirkt die Anordnung der Verlagerungsmittel oberhalb der Fahrzeugbordkante nicht störend oder platzraubend für die reine Personenbeförderungsfunktion des Fahrzeugs.

Die erfindungsgemäße Lösung eignet sich sowohl für Kraftfahrzeuge als auch für Zugfahrzeuge wie Reiseanhänger, Campinganhänger und ähnliches.

In weiterer Ausgestaltung der Erfindung ist in einem Dachbereich des Fahrzeugs ein Aufnahmeraum vorgesehen, in dem der Liegerahmen in seiner Ruhelage angeordnet ist. Vorzugsweise ist der Fahrzeuginnenraum so hoch angeordnet, dass der Aufnahmeraum oberhalb einer Innenraumhöhe angeordnet ist, die für eine normale Kopffreiheit von auf den Fahrzeugsitzen befindlichen Personen notwendig ist. Die Höhe des Aufnahmeraumes ist vorzugsweise derart auf die Höhe des Liegerahmens abgestimmt, dass der Liegerahmen in seiner Ruhelage die Höhe des Aufnahmeraumes ausfüllt. Der Liegerahmen kann entweder vollständig innerhalb des Aufnahmeraumes oder lediglich über einen Teil seiner Höhe innerhalb des Aufnahmeraumes in der Ruheposition angeordnet sein.

In weiterer Ausgestaltung der Erfindung sind Arretiermittel zur Sicherung des Liegerahmens in seiner Funktionslage vorgesehen. Die Arretiermittel dienen dazu, eine stabile Funktionslage des Liegerahmens zu gewährleisten auch für den Fall, dass eine oder mehrere Personen auf dem Liegerahmen liegen.

In weiterer Ausgestaltung der Erfindung sind als Arretiermittel fahrzeugseitige Befestigungselemente wenigstens einer Rücklehnensicherung für wenigstens eine klappbare Rücklehne eines Fahrzeugsitzes vorgesehen. Die fahrzeugseitigen Befestigungselemente weisen somit eine Doppelfunktion auf, da sie zum einen den Liegerahmen in der Funktionslage stützen oder sichern. Zum anderen arretieren die Befestigungselemente wenigstens eine Rückenlehne wenigstens eines Fahrzeugsitzes in ihrer normalen Sitzposition. Um den Liegerahmen in seine Funktionslage abzusenken, werden vorzugsweise die klappbaren Rückenlehnen von darunter befindlichen Fahrzeugsitzen umgeklappt oder in anderer Art und Weise flachgelegt. Die dadurch ohne Funktion befindlichen Befestigungselemente für die Rückenlehnensicherungen können jetzt zur Sicherung und/oder Stützung des Liegerahmens dienen.

In weiterer Ausgestaltung der Erfindung ist dem Liegerahmen ein umlaufender Netzvorhang zugeordnet, dessen in Fahrzeughochrichtung gesehene Länge wenigstens dem Abstand zwischen Liegerahmen und Dachbereich in der Funktionslage des Liegerahmens entspricht, und der mit seinem oberen Endbereich an dem Dachbereich und mit seinem unteren Endbereich an dem Liegerahmen befestigt ist. Dieser Netzvorhang ist vorzugsweise derart engmaschig ausgeführt, dass er Fliegen, Stechmücken und andere Insekten davon abhält, in den Liegebereich einzudringen.

In weiterer Ausgestaltung der Erfindung weist der Netzvorhang wenigstens einen Netzabschnitt auf, der mittels eines Reißverschlusses zumindest abschnittsweise ab- oder auftrennbar ist, um eine Durchtrittsöffnung freizugeben. Dieser ab- oder auftrennbare Netzabschnitt ermöglicht somit eine Einstiegs- oder Ausstiegsluke, um auf die Liegeeinrichtung zu gelangen, oder sich von dieser zu entfernen. Anstelle eines Reißverschlusses können auch andere Arten von lösbaren Längsverschlüssen vorgesehen sein, die eine über die Länge der Ab- oder Auftrennung durchgängige Schließung der Durchtrittsöffnung ermöglichen. Derartige Verschlussmittel sind insbesondere Klett- oder Haftverschlüsse.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in einer Seitenansicht eine Ausführungsform eines erfindungsgemäßen Fahrzeugs mit einem Innenraum, in dem eine Liegeeinrichtung in ihrer Funktionslage dargestellt ist,
- Fig. 2: den Innenraum nach Fig. 1, wobei die Liegeeinrichtung in ihrer Ruhelage dargestellt ist,
- Fig. 3: in schematischer, perspektivischer Darstellung eine Lagerung der Liegeeinrichtung gemäß den Fig. 1 und 2,
- Fig. 4: einen Heckbereich eines Fahrzeugs, an dem eine Transporthalterung angebracht ist,
- Fig. 5: den Heckbereich des Fahrzeugs nach Fig. 4, wobei die Transporthalterung ohne Transportgegenstände gezeigt ist, und
- Fig. 6: in schematischer Darstellung eine Roll- und Ziehmöglichkeit für einen als Transportgegenstand dienenden Rucksack, der gemäß Fig. 4 auf einem Trägerrahmen der Transporthalterung befestigbar ist.

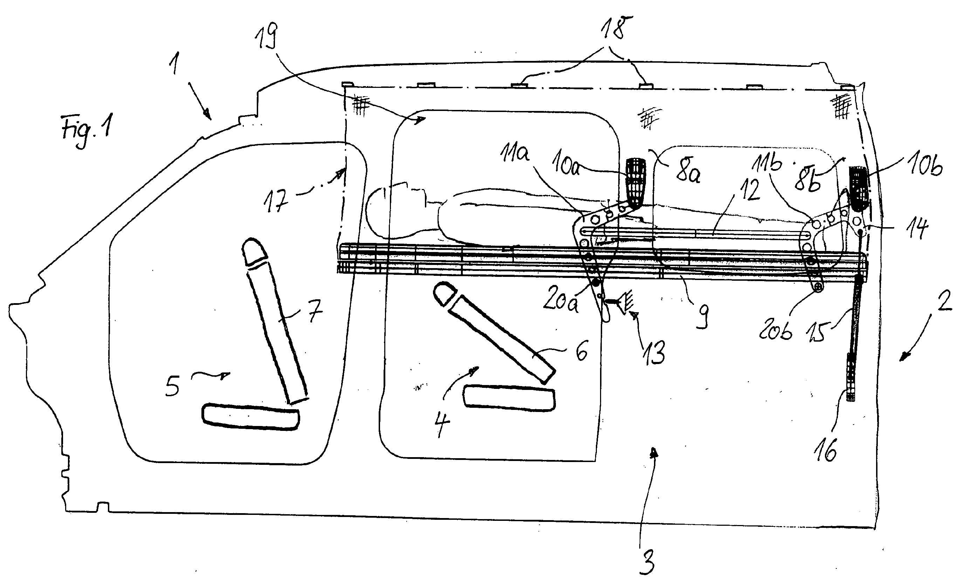

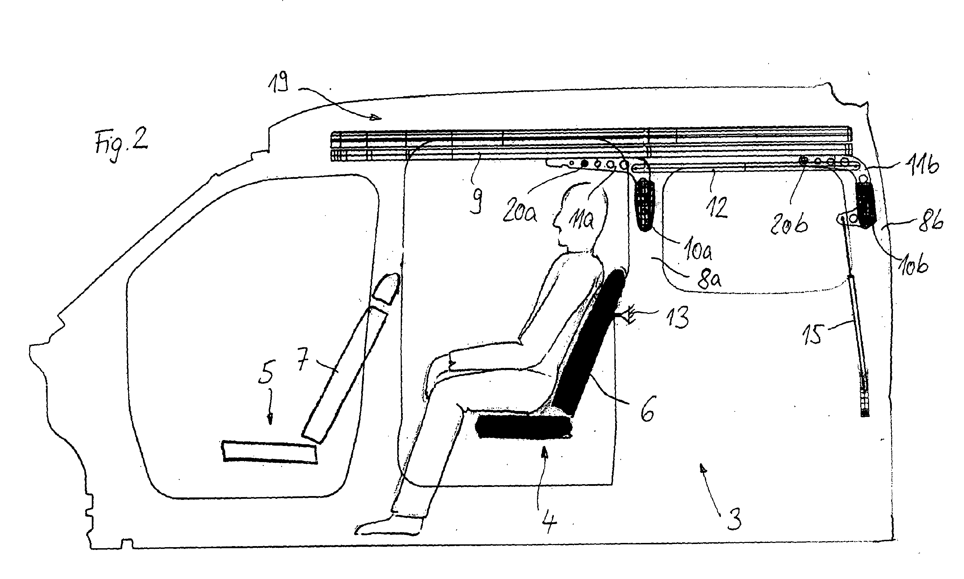

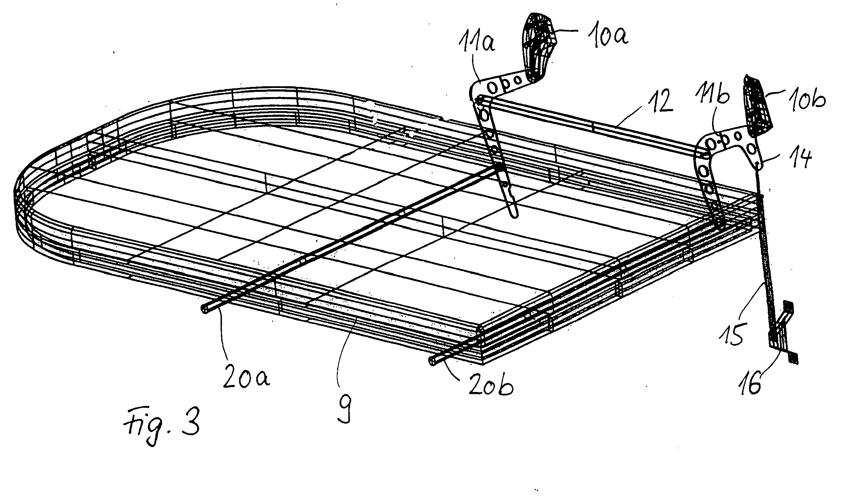

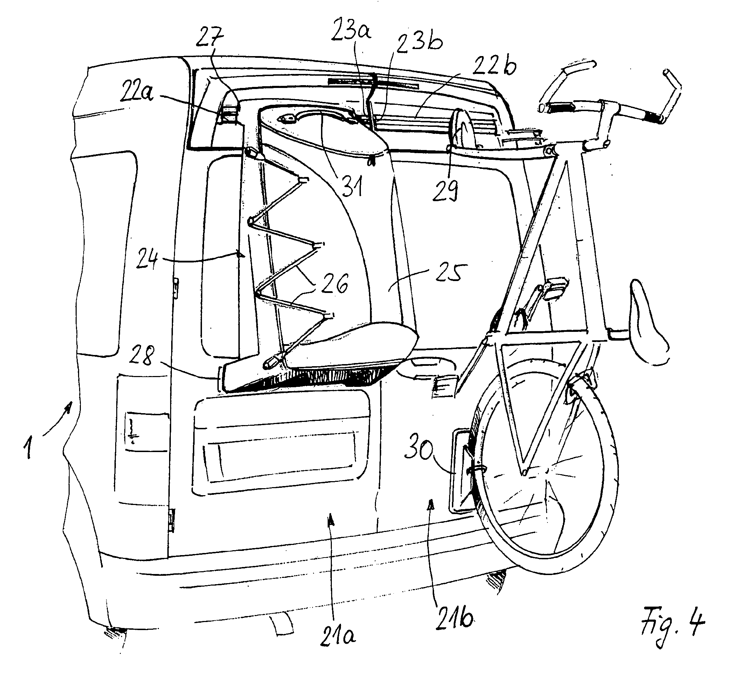

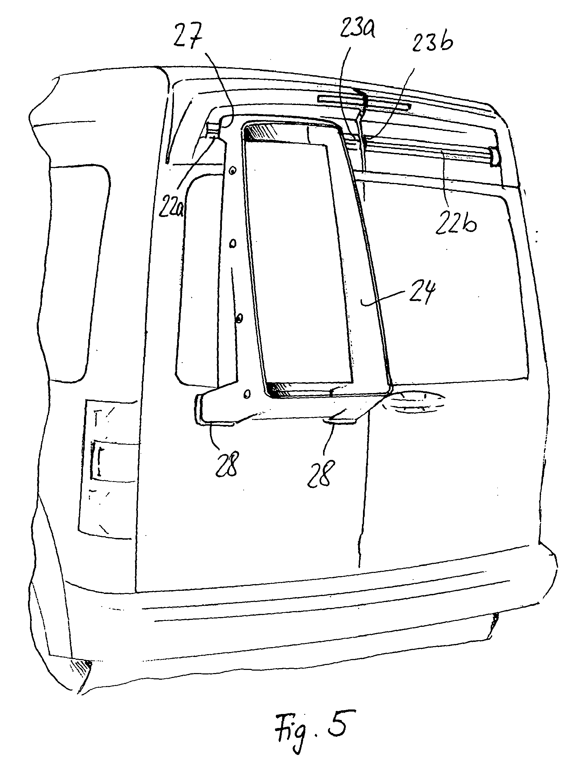

Ein Fahrzeug gemäß den Fig. 1 bis 5 stellt ein Kraftfahrzeug in Form einer kompakten Großraumlimousine, eines Kombi-Personenkraftwagens oder eines ähnlichen Personenkraftwagens dar, der neben wenigstens zwei Sitzreihen im Innenraum noch einen zu den Sitzreihen hin offenen Laderaum in einem Heckbereich des Fahrzeugs umfasst. Das Fahrzeug 1 ist mit einem steil abfallenden Heckbereich 2 versehen, der gemäß den Fig. 4 und 5 zwei jeweils gegensinnig zueinander nach hinten und nach außen öffnende Hecktüren 21 a, 21 b aufweist. Das Fahrzeug 1 weist einen Innenraum 3 auf, der mit einer frontseitigen Sitzanordnung 5 und einer rückseitigen Sitzanordnung 4 versehen ist. Die rückseitige Sitzanordnung 4 weist eine Rückenlehnenanordnung 6 auf, die in ihrer aufrechten Funktionsposition gemäß Fig. 2 einen heckseitigen Laderaum des Innenraumes 3 nach vorne begrenzt. Auf Höhe der rückseitigen Sitzanordnung 4 sind zu beiden Fahrzeugseiten Seitentüren vorgesehen, die in nicht näher dargestellter Weise als Schwenktüren oder als Schiebetüren ausgebildet sein können. Auch die frontseitige Sitzanordnung 5 weist eine Rückenlehnenanordnung 7 auf. Jede Sitzanordnung 4, 5 kann aus mehreren Einzelsitzen, oder aus einer durchgängigen Sitzbank bestehen. Sowohl die frontseitige als auch die rückseitige Sitzanordnung 4, 5 sind jeweils mit nach vorne klappbaren Rückenlehnenanordnungen 6, 7 versehen.

Wie anhand der Fig. 2 erkennbar ist, weist der Innenraum 3 eine lichte Höhe auf, die bis zu einem Dachbereich wesentlich höher gestaltet ist, als dies durch die notwendige Kopffreiheit für eine auf der rückseitigen Sitzanordnung befindliche Person notwendig wäre. Durch diese zusätzliche lichte Höhe in dem Dachbereich des Innenraumes 3 wird ein Aufnahmeraum 19 für eine Liegeeinrichtung 9 geschaffen. Die Liegeeinrichtung 9 weist einen nicht näher bezeichneten Bettrahmen auf, auf dem eine Liegematratze angeordnet ist. Die Liegeeinrichtung 9 ist in ihrer Ruhelage in dem Dachbereich des Innenraumes 3 gemäß Fig. 2 positioniert. Dabei ist die Liegeeinrichtung zumindest über einen Teil ihrer Höhe in dem Aufnahmeraum 19 angeordnet. Die Liegeeinrichtung 9 ist zwischen der in Fig. 2 dargestellten Ruhelage und einer in Fig. 1 dargestellten Funktionslage hubbeweglich durch Verlagerungsmittel im Innenraum 3 gelagert. Hierzu ist eine Schwenkhebelanordnung vorgesehen, die zwei Schwenkhebelpaare 11 a, 11 b aufweist, die jeweils auf beiden Längsseiten des Liegerahmens und der Liegeeinrichtung 9 angeordnet sind. Jedes Schwenkhebelpaar 11 a, 11 b auf den gegenüberliegenden Längsseiten der Liegeeinrichtung 9 ist durch jeweils eine Koppelstange 12 miteinander verbunden, die gemeinsam mit den Schwenkhebelpaaren 11 a, 11 b eine Parallelogrammlenkeranordnung bildet. Die auf gleicher Höhe einander gegenüberliegenden Schwenkhebel 11 a, 11 b sind durch jeweils eine Querstange 20a, 20b miteinander verbunden, die den Liegerahmen der Liegeeinrichtung 9 untergreifen und rahmenfest drehbeweglich an dem Liegerahmen 9 gelagert sind. Die Querstangen 20a, 20b tragen somit den Liegerahmen der Liegeeinrichtung 9. Jeder Schwenkhebel 11a, 11 b ist als Kniehebel gestaltet, wie anhand der Fig. 1 bis 3 erkennbar ist. Jeder Schwenkhebel 11 a, 11 b ist an jeweils einem fahrzeugfest angeordneten Lagerbock 10a, 10b schwenkbeweglich gelagert, wobei jeder Schwenkhebel 11a, 11 b in einer etwa vertikalen Fahrzeuglängsebene schwenkbeweglich ist. Jeder Lagerbock 10a, 10b ist oberhalb einer Fahrzeugbordkante an einem entsprechenden Karosseriesäulenabschnitt 8a einer Karosserietragstruktur des Fahrzeugs 1 befestigt, wobei die Stabilität der Befestigung so gewählt ist, dass die Lagerböcke 10a, 10b problemlos das Gewicht der Liegeeinrichtung 9 einschließlich des Gewichtes von zwei auf der Liegeeinrichtung 9 liegenden Erwachsenen tragen können. Jeder Schwenkhebel 11a, 11 b ist an einem Ende an dem jeweiligen Lagerbock 10a, 10b gelagert und an seinem anderen Ende mit der Querstange 20a, 20b verbunden. Jeder Schwenkhebel 11a, 11b ist als Kniehebel gestaltet, wobei zwei etwa rechtwinklig zueinander abragende Knieschenkel geschaffen werden. In einem Kniebereich, in dem die Knieschenkel ineinander übergehen, greift die Koppelstange 12 an. Die vorderen Schwenkhebel 11a weisen jeweils einen nicht näher bezeichneten Stützfortsatz auf, der in Verlängerung des der Querstange 20a zugeordneten Knieschenkels abragen. Dieser Stützfortsatz ist in nicht näher bezeichneter Weise mit einer Stützaussparung versehen, die sich in der Funktionslage der Liegeeinrichtung 9 (Fig. 1) an einem fahrzeugfesten Befestigungselement 13 abstützt. Das Befestigungselement 13 ist jeweils an einer Seitenwandung des Innenraumes 3 angeordnet und fest mit der Karosserietragstruktur, insbesondere mit der Karosserietragsäule 8a, unterhalb der Fahrzeugbordkante verbunden. Das jeweilige Befestigungselement 13 dient in der Ruhelage der Liegeeinrichtung 9 zur Stützung und Arretierung der Rückenlehnenanordnung 6. Für die Funktionslage der Liegeeinrichtung 9 werden die Rückenlehnenanordnungen 6, 7 beider Sitzanordnungen 4, 5 nach vorne geklappt, wodurch das jeweilige Befestigungselement 13 frei wird und den jeweiligen vorderen Schwenkhebel 11a stützen kann.

An den - in Fahrtrichtung gesehen - hinteren Schwenkhebeln 11 b greift jeweils ein Antriebsmittel in Form einer Gasdruckfeder 15 an, die aufrecht im Bereich einer Seitenwandung positioniert ist und mit ihrem unteren Ende an einer fahrzeugfesten Lagerung 16 gehalten ist. Mit einer Stirnseite ihrer Kolbenstange greift die Gasdruckfeder 15 an einem Hebelfortsatz 14 an, der in der Nähe der Lagerung des Schwenkhebels 11 b als einstückiger Fortsatz des Schwenkhebels 11 b angeordnet ist. Die Gasdruckfeder 15 greift an dem Hebelfortsatz 14 derart an, dass die Gasdruckfeder 15 in der Funktionslage der Liegeeinrichtung 9 sich relativ zu dem Lagerpunkt des jeweiligen Schwenkhebels 11 b an dem Lagerbock 10b in einer Übertotpunktlage befindet. In dieser Übertotpunktlage bewirkt die Gasdruckfeder 15 auf den jeweiligen Schwenkhebel 11 b ein Drehmoment in Richtung des Heckbereiches 2, so dass die Liegeeinrichtung 9 mit ihrem jeweiligen Stützfortsatz des jeweiligen vorderen Schwenkhebels 11a gegen das Befestigungselement 13 gedrückt wird. Sobald die Liegeeinrichtung 9 aus ihrer Funktionslage von Hand angehoben wird, wird bereits bei geringem Kraftaufwand die Gasdruckfeder 15 aus ihrer Übertotpunktlage herausbewegt und unterstützt nun die Hubbewegung der Liegeeinrichtung 9 in ihre Ruhelage gemäß Fig. 2 nach oben. In nicht näher dargestellter Weise sind für diese Ruhelage den Schwenkhebeln 11 a, 11b Arretiermittel zugeordnet, die automatisch in ihre Blockierstellung gebracht werden, sobald die Liegeeinrichtung 9 die Ruhelage gemäß Fig. 2 in dem Aufnahmeraum 19 erreicht hat. Die Arretiermittel können vorzugsweise manuell gelöst werden, wodurch die Liegeeinrichtung 9 gegen die Druckkraft der Gasdruckfedern 15 abgesenkt werden kann. Die wenigstens eine Gasdruckfeder 15 ist vorzugsweise derart ausgelegt, dass sie zumindest weitgehend das Eigengewicht der Liegeeinrichtung 9 ausgleichen kann. Dadurch ist sowohl für die Absenkbewegung als auch für die Hubbewegung der Liegeeinrichtung 9 durch eine Bedienperson kein großer Kraftaufwand erforderlich.

Der Liegeeinrichtung 9 ist zusätzlich ein Netzvorhang 17 zugeordnet, der mit seinem oberen Rand an Halterungen 18 in dem Dachbereich des Innenraumes 3 gehalten ist. Mit seinem unteren, umlaufenden Rand ist der Netzvorhang 17 umlaufend mit dem Liegerahmen der Liegeeinrichtung 9 verbunden. Der Netzvorhang 17 umschließt die Liegefläche vollständig. Die in vertikaler Richtung gesehene Länge des Netzvorhanges 17 ist so gewählt, dass der Netzvorhang 17 in der Funktionslage der Liegeeinrichtung 9 aufgespannt oder zumindest aufgefaltet ist und in der Ruhelage der Liegeeinrichtung 9 gemäß Fig. 2 in dem Aufnahmeraum 19 um die Liegeeinrichtung 9 herum zusammengefaltet ist. Der Netzvorhang 17 bildet einen umlaufenden Schutz der auf der Liegeeinrichtung 9 liegenden Personen gegen Insekten. In nicht näher dargestellter Weise ist der Netzvorhang 17 mit wenigstens einer Einstiegsluke versehen, die durch einen abtrennbaren Netzabschnitt gebildet ist. Der Rand des abtrennbaren Netzabschnittes ist mit dem umgebenden Rand des Netzvorhanges 17 durch einen Reißverschluss durchgängig verbindbar, um eine gleichmäßige und dichte Verbindung in geschlossenem Zustand der Einstiegsluke und damit einer Durchtrittsöffnung zu der Liegefläche zu schaffen.

Wie anhand der Fig. 4 bis 6 erkennbar ist, ist das Fahrzeug 1 in seinem Heckbereich 2 mit einer Transporthalterung versehen, um Transportgegenstände außen am Fahrzeug 1 befestigen und während der Fahrt transportieren zu können. Jede Hecktür 21a, 21 b ist in einem Bereich oberhalb einer jeweiligen Heckscheibe mit jeweils einem in Fahrzeugquerrichtung ausgerichteten Halteprofil 22a, 22b versehen, wobei sich jedes Halteprofil 22a, 22b jeweils über die Breite der jeweiligen Hecktür 21a, 21 b erstreckt. Jedes Halteprofil 22a, 22b ist als Führungsschiene mit einem T-artigen, zur Heckseite hin offenen Schienenprofil versehen, in dem Kulissensteine formschlüssig aufgenommen werden können. Die beiden Halteprofile 22a, 22b sind auf gleicher Höhe angeordnet und an ihrem zum benachbarten Halteprofil 22a, 22b gewandten Stirnende 23a, 23b offen gestaltet. Dadurch ist es möglich, entsprechende Kulissensteine von Halteelementen 27, 29 von diesem Stirnende her in das jeweilige Halteprofil 22a, 22b einzuschieben und längs des Halteprofiles zu verschieben. Jeder Kulissenstein stellt ein formschlüssig in dem Halteprofil zurückgehaltenes Profilstück dar.

Bei einem nicht dargestellten Ausführungsbeispiel ist das Halteprofil mit einem T-artigen Querschnitt versehen und ein Profilstück eines entsprechenden Halteelementes umgreift dieses T-förmige Querschnittsprofil, wodurch in gleicher Weise ein formschlüssiger Rückhalt - auf eine rechtwinklig zu einer Längsrichtung des Halteprofiles abragende Richtung bezogen ― geschaffen ist.

Die beiden offenen Stirnenden 23a, 23b schließen unmittelbar bündig mit jeweils einer etwa vertikal verlaufenden Randkante der jeweiligen Hecktür 21 a, 21 b ab. Da die beiden Halteprofile 22a, 22b sich auf gleicher Höhe befinden, verhindert das eine Halteprofil 22a, 22b jeweils ein Entfernen der Profilstücke, d.h. der Kulissensteine, der Halteelemente 27, 29 aus den offenen Stirnenden, so lange die beiden Hecktüren 21 a, 21 b sich gemäß den Fig. 4 und 5 in ihrem geschlossenen Zustand befinden. Ein Entnehmen der jeweiligen Halteelemente 27, 29 aus den offenen Stirnenden 23a, 23b der Halteprofile 22a, 22b ist nur dann möglich, wenn sich wenigstens eine der beiden Hecktüren 21 a, 21b in ihrer geöffneten Position befindet.

Entsprechende Transportgegenstände, wie vorliegend ein Fahrrad und ein Trägerrahmen 24, werden mittels wenigstens eines oberen Halteelementes 27, 29 in dem jeweiligen Halteprofil 22a, 22b verankert. Ein unterer Abstützbereich wird durch wenigstens eine, als Gegenhalterung dienende Magnethalterung 28, 30 geschaffen. Jede der beiden Hecktüren 21 a, 21 b ist aus magnetisierbarem Material, insbesondere aus Stahlblech, hergestellt. Dadurch ist es möglich, die entsprechende Magnethalterung 28, 30 an beliebiger Stelle der jeweiligen Hecktür 21 a, 21 b zu positionieren und durch Magnetwirkung an der Außenwandung der jeweiligen Hecktür 21 a, 21 b zu fixieren. Derartige Magnethalterungen sind grundsätzlich bekannt. Hierzu wird beispielhaft auf Magnethalterungen für Ski verwiesen, die in einem Dachbereich eines Fahrzeugs eingesetzt werden.

Der Trägerrahmen 24 ist gemäß Fig. 5 ein einteiliges Bauteil, der im Bereich eines oberen Rahmenteiles mit nicht näher dargestellten Halteelementen 27 versehen ist, die in das Halteprofil 22a von dem offenen Stirnende 23a her einschiebbar und durch nicht näher dargestellte Arretiermittel in der gewünschten Längsposition in dem Halteprofil 22a blockierbar sind. In gleicher Weise ist das Halteelement 29 durch entsprechend einstellbare Arretiermittel in gelöstem Zustand längsverschiebbar in dem Halteprofil 22b oder in Längsrichtung blockiert gehalten.

Der Trägerrahmen 24 weist im Bereich seines unteren Rahmenteiles zwei Stützfüße auf, die mit jeweils einer Magnethalterung 28 versehen sind. Die Magnethalterungen 28 sind wie die Magnethalterung 30 in eine Löse- oder eine Fixierposition überführbar. Die Einstellung des jeweiligen Fixier- oder Lösezustandes erfolgt vorzugsweise manuell durch ein geeignetes Stellmittel.

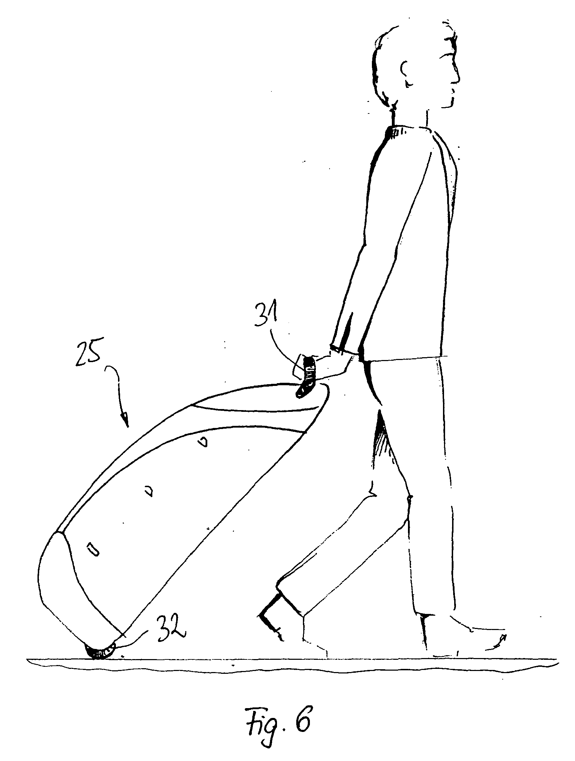

Der Trägerrahmen 24 ist für die Aufnahme eines rücksackartigen Gepäckstückes 25 vorgesehen, das mit Hilfe elastischer Riemen 26 an entsprechenden, nicht näher bezeichneten Haken des Trägerrahmens 24 lösbar befestigt werden kann. Das rucksackartige Gepäckstück 25 weist einen Tragegriff 31 im Bereich seiner Oberseite auf und ist an seiner Unterseite mit wenigstens zwei zueinander beabstandeten Laufrollen 32 versehen, die gemäß Fig. 6 ein Rollen und Hinterherziehen des rucksackartigen Gepäckstückes 25 ermöglichen.

## Patentansprüche

1. Fahrzeug mit einer Transporthalterung für eine Außenwandung eines Fahrzeuges mit wenigstens einem fahrzeugfest angeordneten Halteprofil, an dem wenigstens ein Halteelement formschlüssig und lösbar befestigbar ist,
**dadurch gekennzeichnet,dass**
das Halteprofil (22a, 22b) an einer Außenwandung einer Fahrzeugtür (21 a, 21 b) quer zu einer Türhochachse ausgerichtet ist, und dass dem Halteprofil (22a, 22b) in Abstand unterhalb des Halteprofiles eine an der Außenwandung angeordnete Gegenhalterung (28, 30) zugeordnet ist, die wenigstens einen zusätzlichen, unteren Abstützbereich für wenigstens ein Transportgut (24, 25) bildet, das mit wenigstens einem oberen Stützbereich an dem Halteelement (27, 29) gehalten ist.

2. Fahrzeug nach Anspruch 1, **dadurch gekennzeichnet, dass** als Gegenhalterung eine Magnethalterung (28, 30) vorgesehen ist, die in individueller Positionierung an die Außenwandung ansetzbar ist.

3. Fahrzeug nach Anspruch 1, **dadurch gekennzeichnet, dass** das wenigstens eine Halteelement (27) und die Gegenhalterung (28) an einem gemeinsamen Trägerrahmen angeordnet sind, an dem wenigstens ein Transportgut (25) lösbar befestigbar ist.

4. Fahrzeug nach Anspruch 3, **dadurch gekennzeichnet, dass** als Transportgut ein rucksackartiges Gepäckteil (25) vorgesehen ist, das mit wenigstens einer Laufrolle (32) sowie mit wenigstens einem Tragegriff (31) versehen ist.

5. Fahrzeug nach Anspruch 1, **dadurch gekennzeichnet, dass** das Halteprofil (22a, 22b) wenigstens ein offenes Stirnende (23a, 23b) zum Einschieben oder Entfernen des wenigstens einen Halteelementes (27, 29) in Profillängsrichtung aufweist, dass das Halteprofil bis zu einem Randbereich der Fahrzeugtür (21a, 21b) erstreckt ist, und dass auf Höhe des Halteprofiles (22a, 22b) an einem benachbarten Randbereich eines an die Fahrzeugtür anschließenden Karosserieteiles (21a, 21 b) ein Sicherungsteil (22a, 22b) vorgesehen ist, das ein Einschieben oder Entfernen des Halteelementes (27, 29) relativ zu dem offenen Stirnende des Halteprofiles bei geschlossener Fahrzeugtür verhindert.

6. Fahrzeug nach Anspruch 5, **dadurch gekennzeichnet, dass** als Sicherungsteil ein weiteres Halteprofil (22a, 22b) vorgesehen ist, das fluchtend zu dem Halteprofil der Fahrzeugtür an dem anschließenden Karosserieteil angeordnet ist.

7. Fahrzeug mit einem Innenraum, der mehrere Fahrzeugsitze aufweist, und in dem eine zwischen einer Funktionslage und einer Ruhelage angeordnete Liegeeinrichtung gelagert ist, insbesondere nach einem der vorhergehenden Ansprüche, **dadurch gekennzeichnet, dass** die Liegeeinrichtung (9) einen Liegerahmen aufweist, der zwischen der Ruhelage und der Funktionslage relativ zu einer Fahrzeughorizontalebene parallel höhenverlagerbar ist, und dass an dem Liegerahmen Verlagerungsmittel (11a, 11b) angreifen, die oberhalb einer Fahrzeugbordkante an Karosseriesäulenabschnitten (8a, 8b) angeordnet sind.

8. Fahrzeug nach Anspruch 7, **dadurch gekennzeichnet, dass** die Verlagerungsmittel als Schwenkhebel (11a, 11 b) ausgeführt sind, die zumindest im wesentlichen in Fahrzeugvertikalebenen schwenkbeweglich gelagert sind.

9. Fahrzeug nach Anspruch 7, **dadurch gekennzeichnet, dass** in einem Dachbereich des Fahrzeugs ein Aufnahmeraum (19) vorgesehen ist, in dem der Liegerahmen (9) in seiner Ruhelage angeordnet ist.

10. Fahrzeug nach Anspruch 7, **dadurch gekennzeichnet, dass** Arretiermittel (13) zur Sicherung des Liegerahmens (9) in seiner Funktionslage vorgesehen sind.

11. Fahrzeug nach Anspruch 10, **dadurch gekennzeichnet, dass** als Arretiermittel fahrzeugseitige Befestigungselemente (13) wenigstens einer Rücklehnensicherung für wenigstens eine klappbare Rücklehne (6) eines Fahrzeugsitzes (4) vorgesehen sind.

12. Fahrzeug nach Anspruch 7, **dadurch gekennzeichnet, dass** dem Liegerahmen ein umlaufender Netzvorhang (17) zugeordnet ist, dessen in Fahrzeughochrichtung gesehene Länge wenigstens dem Abstand zwischen Liegerahmen und Dachbereich in der Funktionslage des Liegerahmens entspricht, und der mit seinem oberen Endbereich an dem Dachbereich und mit seinem unteren Endbereich an dem Liegerahmen befestigt ist.

13. Fahrzeug nach Anspruch 12, **dadurch gekennzeichnet, dass** der Netzvorhang wenigstens einen Netzabschnitt aufweist, der mittels eines Reißverschlusses zumindest abschnittsweise abtrennbar ist, um eine Durchtrittsöffnung freizugeben.
